# EUROPEAN PATENT APPLICATION

(11) **EP 4 542 062 A1**
(43) Date of publication of application: **23.04.2025**
(21) Application number: 23204356.2
(22) Date of filing: 18.10.2023
(51) Int. Cl.: F16B 5/04, B21J 15/02, B21J 15/14, B29C 65/56, B29C 65/00, F16B 19/06, F16B 19/08

(54) **SEMI-HOLLOW SELF-PIERCING RIVET AND JOINING METHOD USING SAME**

(71) Applicant: Newfrey LLC, New Britain, CT 06053 (US)
(72) Inventor: Stock, Maximilian, 35394 Giessen (DE); Bartig, Paul, 35398 Giessen (DE)
(74) Representative: Witte, Weller & Partner Patentanwälte mbB

(57) **Abstract**

A semi-tubular self-piercing rivet (10) comprising a head (12), and a shaft (14), wherein the shaft (14) comprises a shaft axial end face (16) opposite to the head (12), wherein the shaft (14) has a shaft blind cavity (18), wherein the shaft (14) comprises a shaft radial outer face (28) and a plurality of longitudinal projections (22) projecting from the shaft radial outer face (28), wherein the radial shaft outer face (28) defines a first shaft outer diameter (DA1), wherein the longitudinal projections (22) each have a radial height (HV) relative to the shaft radial outer face (28), and wherein the shaft (14) is configured to be radially widened when being punched into a workpiece arrangement. A ratio of the radial height (HV) of the longitudinal projections (22) to the first shaft outer diameter (DA1) defined by the radial shaft outer face (28) is in a range from 0.03 to 0.2.

## Description

The present disclosure relates to a semi-hollow self-piercing rivet (SPR) and to a method of joining work piece layers by means of an SPR.

Punch rivets are a type of fastener used in various industries to join two or more materials together. These rivets are designed to create a secure and permanent connection by deforming and locking materials in place.

Semi-hollow self-piercing rivets are a specific type of punch rivet designed for joining multiple layers of materials, often of different thicknesses or compositions. They are called "semi-hollow" because they have a partially hollow shaft, which allows for a more efficient installation process. These rivets are "self-piercing" because they are designed to pierce through material being joined during installation, eliminating the need for pre-drilled holes. This feature is particularly useful when joining materials like metals and plastics or composites.

SPRs are commonly used in automotive and aerospace industries, as well as in manufacturing applications where lightweight yet strong joints are required. They provide a convenient way to create strong, reliable connections in situations where access to both sides of the workpiece may be limited or where pre-drilled holes are impractical.

SPRs are designed to partially pierce through the material layers being joined, but they do not fully penetrate all the layers. This partial penetration is intentional and provides several advantages, which include, inter alia: precise control over the depth of penetration; corrosion resistance because there is no opening or hole on the back side of the joint and aesthetic integrity of the materials being joined.

The shaft of most SPRs is strictly cylindric. Examples of SPRs having longitudinal projections which project from a cylindrical shaft radial outer face are disclosed in documents UDS 2015 / 0 059 153 A1 and EP 1 167 780 A2.

One of the challenges in this field is to provide an SPR which is able to join high-strength and ultra-high-strength materials.

It is the object of the present disclosure to provide an improved SPR, and an improved method of joining work piece layers.

The above object is achieved by a semi-tubular self-piercing rivet comprising a head, and a shaft, wherein the shaft comprises a shaft axial end face opposite to the head, wherein the shaft has a shaft blind cavity, wherein the shaft comprises a shaft radial outer face and a plurality of longitudinal projections projecting from the shaft radial outer face, wherein the radial shaft outer face defines a first shaft outer diameter, wherein the longitudinal projections each have a radial height relative to the shaft radial outer face, wherein the shaft is configured to be radially widened when being punched into a workpiece arrangement, and wherein a ratio of the radial height of the longitudinal projections to the first shaft outer diameter defined by the radial shaft outer face is in a range from 0.03 to 0.2.

Further, the above object is achieved by a method of joining work piece layers, comprising the steps of stacking at least two work piece layers on top of each other, and punching a rivet as defined above into the so formed work piece layer stack.

The present disclosure provides an SPR which is able to join high-strength and ultra-high-strength materials, wherein (a) the rivet does not collapse, and/or wherein (b) the system technology can apply the required forces, and/or wherein (c) the joint is crack-free, and/or wherein (d) the quality requirements regarding undercut formation, residual bottom thickness (distance between the punched rivet and a lowermost surface of the joint) , etc. are met.

In general, in joints of high-strength and ultra-high-strength materials a limited deformability (ductility) is accompanied by increasing strength, and the hole slug covers the rivet hole and a large volume displacement takes place in the layers of material underneath.

It is therefore beneficial that the present disclosure allows to reduce the hole slug area to solve particularly the above challenges b) and c). Reducing the displacement of material in the bottom layer results in lower system forces, and the cracking tendency of the joining materials is reduced, as this results in lower deformations in the materials.

In the prior art, a reduction of the outer diameter of the SPR was aimed for, as the hole slug area correlates with the outer diameter of the rivet. With a constant diameter, however, this results in a significant loss of stability.

The present disclosure provides the longitudinal projections on the shaft radial outer face. The longitudinal projections preferably form reinforcing struts which allow to meet at least one of the above challenges a) to d). In addition, the slug hole area can be reduced compared to SPRs having the same outer shaft diameter.

A further circumstance in the joining of high-strength and ultra-high-strength materials is the formation of a gap between the top work piece layer and the bottom work piece layer, due to a high stiffness of the top layer. With the present disclosure, the rivet (SPR) can be inserted deeper into the high-strength joint due to lower joining forces. Likewise, the top work piece layer may wedge into the outer contour of the SPR. Both of these factors favor the closure of the joint gap. This offers the possibility of ensuring an enlarged bonding surface when using an adhesive between the layers.

The projections are preferably distributed regularly around the circumference of the shaft. The longitudinal projections preferably each extend in parallel to a longitudinal axis of the shaft. The radial shaft outer face preferably follows a circular contour on the first shaft outer diameter. The head preferably has a circular outer periphery. The axial length of the longitudinal projections is preferably the same as the axial length of the shaft, so that the projections each extend over the entire axial length of the shaft. In other embodiments, a transition portion may be formed between the head and the shaft, particularly between the longitudinal projections and the head.

The above object is thus achieved in full.

In a preferred embodiment which forms an independent invention in combination with the preamble of claim 1, the number of longitudinal projections is greater than 5 and less than 15.

This results in a flower-type or torx-type cross sectional structure, and thus to a good tradeoff between a small slug hole area and high resistance against folding or buckling.

In a preferred embodiment which forms an independent invention in combination with the preamble of claim 1, a ratio of a slug punch area (slug hole area) defined by a combined contour of the shaft radial outer face and the longitudinal projections, to a circular area defined by the outer diameter of the longitudinal projections, is in a range from 0.75 to 0.95, particularly in a range from 0.80 to 0.90.

In other words, the present invention allows to reduce the slug hole area in comparison to prior art rivets by 5 to 25 %, particularly by 10 to 20 %, preferably by 12 to 15 %.

According to another preferred embodiment which forms an independent invention in combination with the preamble of claim 1, a ratio of twice the radial height of the longitudinal projections to a difference between the first shaft outer diameter and an inner diameter of the shaft blind cavity, as measured in the plane of the shaft axial end face, is in a range from greater than 1.0 to smaller than 1.6.

In other words, the radial height of the longitudinal projections is preferably greater than a radial base thickness of the shaft in the plane of the shaft axial end face.

This provides an enhanced capability of widening the shaft in this area so as to produce a sufficient undercut formation. Also, this can lead to an enhanced residual bottom thickness.

In another embodiment which forms an independent invention in combination with the preamble of claim 1, the blind cavity has a second cavity inner diameter in an axial portion away from the shaft axial end face, wherein the longitudinal projections define a second shaft outer diameter, and wherein a ratio of the second cavity inner diameter to the second shaft outer diameter is smaller than 0.55, particularly smaller than 0.5.

This allows to provide for sufficient stability in a final phase of the joining process and provides an enhanced resistance against folding.

In a preferred embodiment, each of the longitudinal projections extends over a projection angular range in the circumferential direction, which is larger than a shaft outer face angular range between two adjacent longitudinal projections.

This embodiment also increases the resistance against folding.

Furthermore, it is preferred if the shaft axial end face has an end surface area which is smaller than a circular projection area which is, in the plane of the shaft axial end face, defined by a first inner diameter of the shaft blind cavity and a second shaft outer diameter defined by the longitudinal projections.

In another preferred embodiment, in a cross-sectional view, each of the projections has an outer contour portion arranged on a second shaft outer diameter, and a connection contour portion which connects the outer contour portion and the shaft radial outer face.

Preferably, each of the projections has a single outer contour portion arranged on the second shaft outer diameter and two connection contour portions which are arranged on opposite circumferential ends of the projection and which each connect the outer contour portion and the shaft radial outer face.

Preferably, the connection contour portion is an arcuate contour defined by a projection connection radius.

It has been found that the above-described projection contour allows to meet the challenges when joining high-strength and ultrahigh-strength materials.

In another preferred embodiment, a ratio between the first shaft outer diameter and a first inner diameter of the blind cavity, as measured in the plane of the shaft axial end face, is in a range from 1.10 to 1.30, particularly in a range from 1.14 to 1.20.

In another preferred embodiment, a ratio between an outer head diameter and a first shaft outer diameter is in a range from 1.40 to 1.90, particularly in a range from 1.50 to 1.80.

In another preferred embodiment, a ratio between an axial length of the blind cavity and an axial length of the longitudinal projections is in a range from 0.20 to 0.95, particularly in a range from 0.40 to 0.90, and preferably in a range from 0.60 to 0.90.

The longitudinal projections may extend over the entire axial length of the shaft. In another embodiment, a transition portion is provided between the longitudinal projections and an underside of the head.

In any case, the longitudinal projections extend preferably up to the shaft axial end face.

A ratio of an axial length of the blind cavity and an axial length of the shaft may vary largely, as the axial shaft length may vary considerably, while the axial length of the blind cavity is the same or almost the same for each of these varying axial shaft lengths. Preferably, the axial length of the blind cavity is an a range from 2 mm to 3 mm, preferably in a range from 2.2 mm to 2.8 mm.

In another preferred embodiment, each of the parts of the shaft radial outer face which are arranged between two adjacent longitudinal projections, tapers off into a transition portion between the projections and the head at a taper angle in a range from 12 degrees to 50 degrees, particularly in a range from 15 degrees to 35 degrees, and preferably in a range from 15 degrees to 25 degrees.

If there is no transition portion, these respective parts preferably transition directly into an underside radius portion connecting these parts and an underside of the head.

In another preferred embodiment, the blind cavity has a first portion arranged on a side of the head and a second portion arranged on a side of the shaft axial end face, wherein the second portion is defined by an arcuate cavity surface which connects the first portion and the axial shaft end face, wherein a cavity radius of the arcuate cavity surface is preferably in a range from 2 mm to 4 mm.

The first portion of the blind cavity is preferably a constant diameter portion which defined a second inner diameter of the blind cavity.

A ratio of an axial length of the first portion to an axial length of the second portion is preferably in a range from 0.1 to 0.3. In any case, the axial length of the second portion is preferably greater than the axial length of the first portion.

In another preferred embodiment, a head underside of the head includes an underside portion, which is preferably an inclination portion, and a radius portion which connects the underside portion and the shaft with an underside radius.

In a particularly preferred embodiment, a second outer shaft diameter defined by an outer contour of the longitudinal projections is 5.5 mm, and/or a slug punch area (slug hole area) is in a range from 19 mm² to 22 mm², and/or an area of the shaft axial end face is in a range from 4 mm² to 8 mm².

The material of the rivet is preferably a heat-treatable steel which is preferably boron-alloyed.

In addition, the rivet preferably has a hardness of 450 - 585 HV10.

Further, it is preferred if the rivet is formed by a cold-forming process. In the method according to the present disclosure, at least one of the at least two workpiece layers is made of high-strength steel or ultra-high-strength steel.

The present disclosure provides at least one of the following advantages:
- Reduction of maximum joining forces/setting forces (relatively small die volume is required, less material is displaced);
- Smaller dies can be used;
- Creation of crack-free joints of brittle and therefore non-deformable materials such as aluminum cast condition F, owing to the lower displaced volume;
- Closing of the joint gap in high-strength and ultra-high-strength applications possible by wedging of the top layer on the shaft contour of the rivet (avoiding upward slipping) and by deeper rivet setting, owing to relatively low setting forces, allowing also for an increase of the load capacity of joints with adhesive;
- rivet joint secures safety against twisting of the materials to be joined so that single point riveted joints are possible (in contrast to the case of cylindrical semi-tubular rivets, where at least two rivet joints are required to secure against twisting);
- rivet has a higher moment of inertia against folding/buckling than a cylindrical rivet with the same rivet bore and same cross-sectional area;
- Shaft contour enables cold forming of smaller second cavity inner diameters such as Ø2.5mm with a maximum shaft diameter of QJ5.5mm, owing to the locally increased reduction in cross-section due to the "grooves" between projections.

The present disclosure allows the use of top layer material strengths >600MPa, and of bottom layer materials with limited ductility, in particular aluminum in state F. For joining joints with cast aluminum materials in condition F, it is usually necessary to use very flat dies to prevent tearing of the aluminum. This results in a very high pressure on the rivet, which can cause it to collapse, or to microcracks in the rivet, which is why more stable rivets are required. For other reasons such as feed technology, the maximum shaft diameter for semi-tubular self-piercing rivets is limited in many cases to 5.5 mm. In prior art rivets, the inner diameter if the cavity is therefore not smaller than 2.9 mm.

It will be understood that the afore-mentioned features and to be described hereinafter cannot only be used in the respectively given combination, but also in different combinations or independently, without leaving the scope of the present invention.

Further features and advantages of the invention can be taken from the subsequent description of preferred embodiments with reference to the drawings. In the drawings:
- Fig. 1: is a schematic perspective view of a first embodiment of a rivet;
- Fig. 2: is a bottom view of the rivet of Fig. 1;
- Fig. 3: is a sectional view along a line III-III in Fig. 2;
- Fig. 4: is a detail IV of Fig. 2;
- Fig. 5: is a schematic perspective view of a second embodiment of a rivet;
- Fig. 6: is a bottom view of the rivet of Fig. 5;
- Fig. 7: is a sectional view along a line VII-VII in Fig. 6;
- Fig. 8: is a detailed VIII of Fig. 6;
- Fig. 9: is a cross-sectional view along a line IX-IX in Figs. 3 and 7;
- Fig. 10: is a cross-sectional view along a line X-X in Figs. 3 and 7;
- Fig. 11: is a cut image of a joint of two workpiece layers by a rivet of Figs. 1 to 4;
- Fig. 12: is a view similar to Fig. 11 of a joint using a prior art rivet; and
- Fig. 13: is a view similar to Fig. 10 of a third embodiment of a rivet.

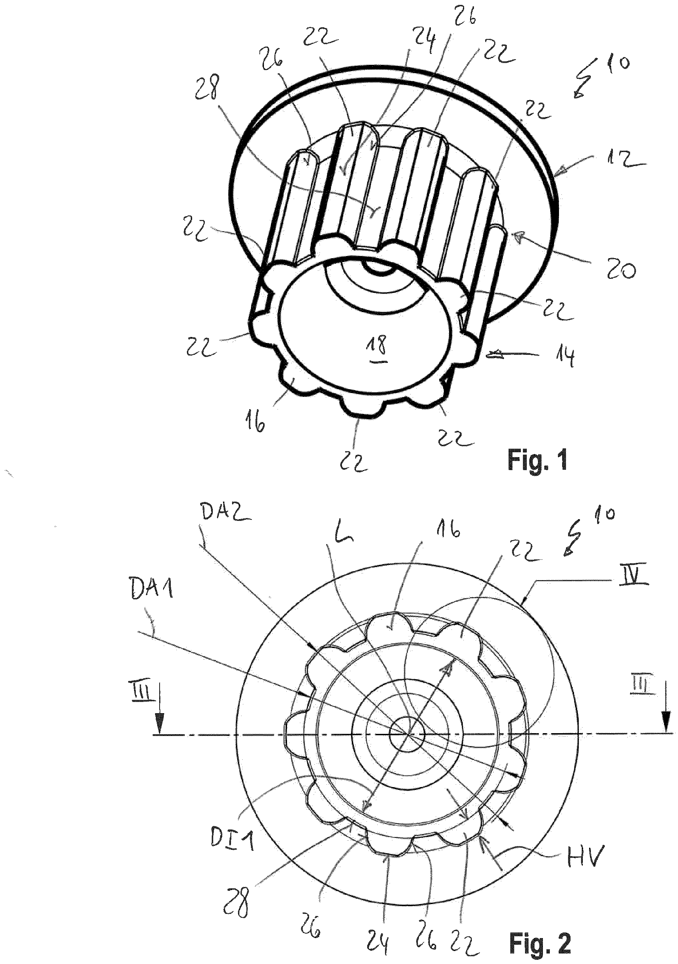

A first embodiment of a semi-tubular self-piercing rivet (SPR) is designated with reference numerals 10 and is shown in Figs. 1 to 4.

The rivet 10 has a head 12 with a circular outer periphery and a flat upper surface. The head 12 has a head diameter DH and a head length LH.

Further, the rivet 10 comprises a shaft 14. The rivet is, except for longitudinal projections described later, essentially rotationally symmetric about a longitudinal axis L. The rivet 10 has an overall rivet length LN which includes the head length LH.

The shaft 14 has a shaft axial end face 16 opposite to the head 12. The shaft axial end face 16 lies in a plane which is perpendicular to the longitudinal axis L.

The shaft 14 has a shaft blind cavity 18. The shaft blind cavity 18 extends from the shaft axial end face 16 in a longitudinal direction into the shaft 14 and has a cavity length LC which is smaller than the length of the shaft 14.

The shaft 14 is arranged directly adjacent to the head 12, so that there is no transition portion 20 therebetween (i.e. a transition portion with an axial length of zero).

The rivet 10 comprises a number of (in the present embodiment: 9) longitudinal projections 22. Each of the longitudinal projections 22 has a projection length LP in the longitudinal direction L, which is identical to the axial length of the shaft 14.

The longitudinal projections 22 each extend in a direction parallel to the longitudinal direction L. The cross-section of the longitudinal projections 22 along the longitudinal direction is preferably constant, so that the cross-section of each of the longitudinal projections 22 at the shaft axial end face 16 is identical to the cross-section of the longitudinal projections 22 in an area adjacent to the head 12.

Each of the projections 22 projects in a radial direction. Particularly, each of the plurality of longitudinal projections 22 projects radially from a shaft radial outer face 28 of the shaft 14.

The shaft radial outer face 28 is based on a cylindrical shape and is arranged on a first shaft outer diameter DA1.

On the other hand, each of the plurality of longitudinal projections 22 has an outer contour portion 24 which is arranged on a second shaft outer diameter DA2. In other words, the longitudinal projections 22 together define the second shaft outer diameter DA2.

Each of the projections 22 has two connection contour portions 26 which connect the outer contour portion 24 with the shaft radial outer face 28. The two connection contour portions 26 are arranged at opposite circumferential ends of the outer contour portion 24. Each of the connection contour portions 26 is an arcuate contour defined by a projection connection radius RP.

Each of the longitudinal projections 22 has a radial height HV relative to the shaft radial outer face 28, wherein HV is the radial distance between the shaft radial outer face 28 and the outer contour portion 24. In other words, HV = (DA2 - DA1)/2.

The shaft blind cavity 18 includes a first portion 30 arranged on a side of the head 12 and a second portion 32 arranged on a side of the shaft axial end face 16.

The first portion 30 has a second cavity inner diameter DI2 which is constant over the axial extension of the first portion 30. As an alternative, the shaft blind cavity 18 may be formed without an axial constant diameter portion, i.e. without first portion 30. In other words, the axial length of the first portion 30 may be zero, and such first portion essentially defines a bottom of the shaft blind cavity.

The second portion 32 has a first cavity inner diameter DI1 in a plane of the shaft axial end face 16. In other words, the first cavity inner diameter DI1 is a cavity opening diameter.

The second portion 32 is defined by an arcuate cavity surface 42 which connects the first portion 30 (which may have an axial length greater than zero or equal to zero) and the axial shaft end face 16. A cavity radius RC of the arcuate cavity surface 42 starts at the first portion 30 and extends to the shaft axial end face 16, defining an angle with the shaft axial end face 16 which is smaller than 90 degrees and larger than 45 degrees. An area of the shaft 14 at the interface between the first portion 30 and the second portion 32 is in a range from 14 mm² to 18 mm², and preferable between 14 mm² and 16 mm². Such range improves the stability of the rivet during the setting.

The head 12 has a head underside 36 which is formed by an annular inclination portion 38 which is inclined with respect to a radial plane at an angle αU (inclination portion angle).

The inclination portion transitions into the shaft radial outer face 28 by a radius portion 40 which has an underside radius RU.

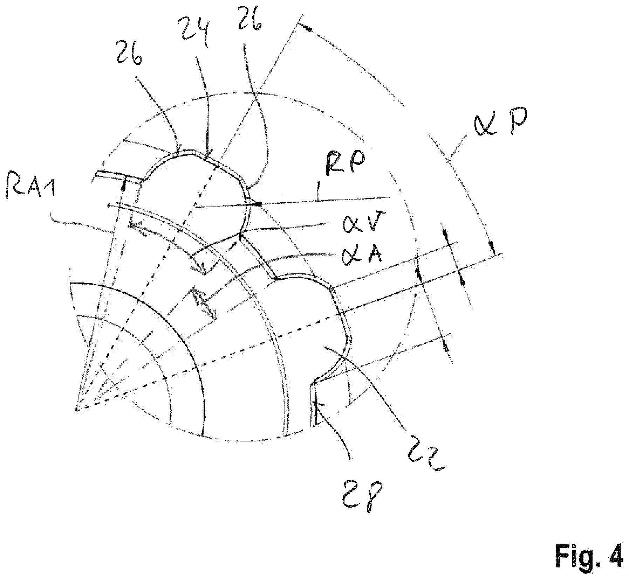

As can be seen particularly in Fig. 4, each of the annular projections extends in a circumferential direction over a projection angular range αV. Further, each part of the shaft radial outer face 28 between two projections 22 in the circumferential direction extends over a shaft outer face angular range αA. It is preferred if αA is smaller than αV.

The number of longitudinal projections 22 defines a partition angular range αP, wherein αP = αV + αA. In the present embodiment, where the rivet 10 has nine longitudinal projections 22 which are distributed regularly over the circumference of the shaft 14, the partition angular range is 360°/9 = 40°.

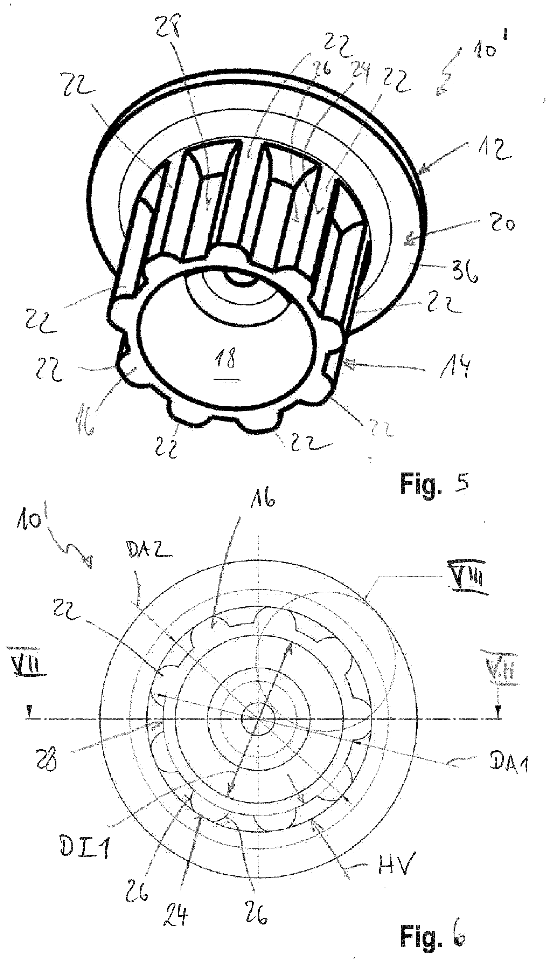

In Figs. 5 to 8, a second embodiment of a rivet 10' is shown. The rivet 10' is essentially identical to the rivet 10 of Figs. 1 to 4, except for the following differences.

Firstly, in the embodiment of Figs. 5 to 8, a transition portion 20' is arranged between the longitudinal projections 22 and the head 12. The transition portion 20 has a longitudinal extension which is larger than zero.

Particularly, each of the parts of the shaft radial outer face 28 which are arranged between two adjacent longitudinal projections 22, tapers off into the transition portion 20 at a taper angle αT in a range from 12° to 50°, particularly in a range from 15° to 35°.

Further, as shown in the below Table 1, some of the dimensions of the rivets 10, 10' differ slightly (for example the head length LH).

On the other hand, the main difference is that the longitudinal projections 22 of the rivet 10 of Figs. 1 to 4 extend over the full axial length of the shaft 14, whereas the longitudinal projections 22 of the rivet 10' of Figs. 5 to 8 extends over a projection length LP which is smaller than the shaft length.

The rivets 10, 10' of Figs. 1 to 4 and of Figs. 5 to 8, respectively, each have the following dimensions:

**Table 1**

| | | Fig. 1 to 4 | Fig. 5 to 8 | |
|---|---|---|---|---|
| LN | rivet length | 5.0 | 5.0 | |
| LH | head length | 0.5 | 0.4 | |
| LP | projection length | = shaft length | 3.12 | |
| LC | cavity length | 2.5 | 2.5 | |
| DH | head diameter | 7.75 | 7.75 | |
| DA1 | first shaft outer diameter | 4.7 | 4.7 | |
| DA2 | second shaft outer diameter | 5.5 | 5.5 | |
| DI1 | first cavity inner diameter | 4.1 | 4.1 | |
| DI2 | second cavity inner diameter | 2.5 | 2.5 | |
| RC | connection radius | 3.0 | 3.0 | |
| RP | projection connection radius | 0.5 | 0.5 | |
| RU | underside radius | 0.4 | 0.5 | |
| HV | projection height | 0.4 | 0.4 | |
| αV | projection angular range | 27° | 27° | |
| αA | shaft outer face angular range | 13° | 13° | |
| αP | partition angular range | 40° | 40° | |
| αT | taper angle | - | 30° | |
| αU | inclination portion angle | 10° | 10° | |
| All dimensions in [mm] unless indicated otherwise, and with usual tolerances | | | | |

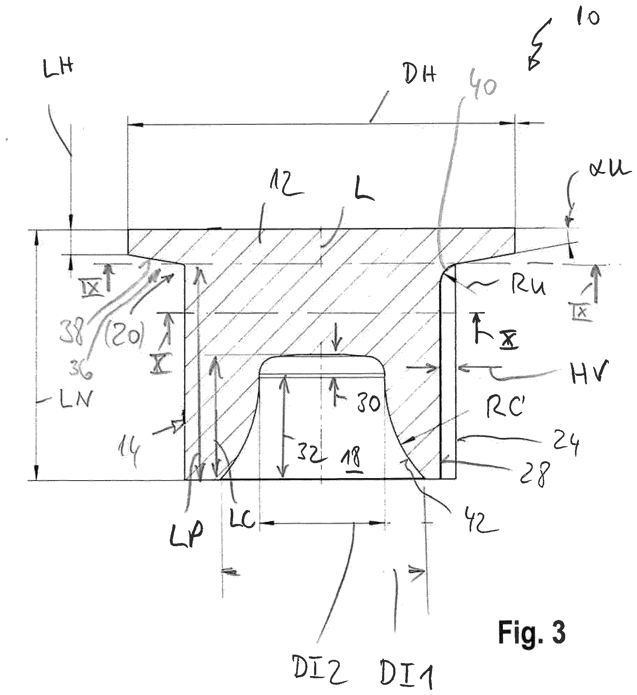

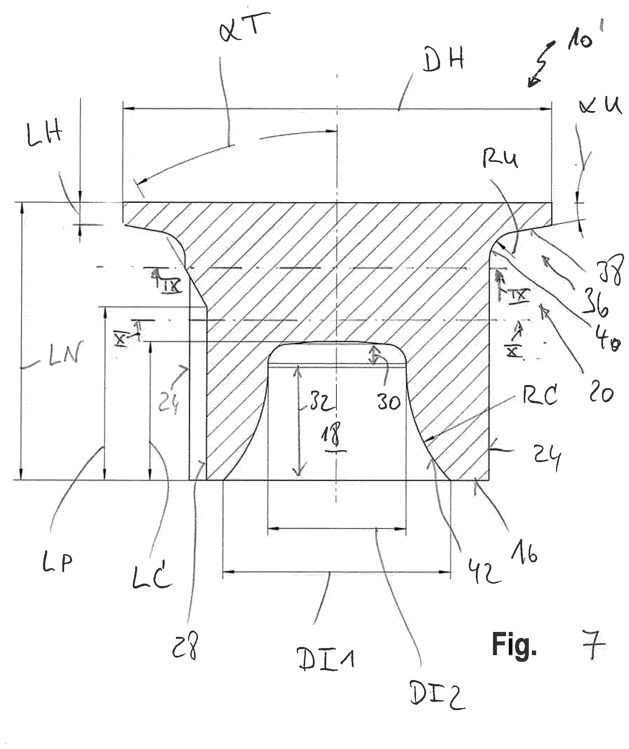

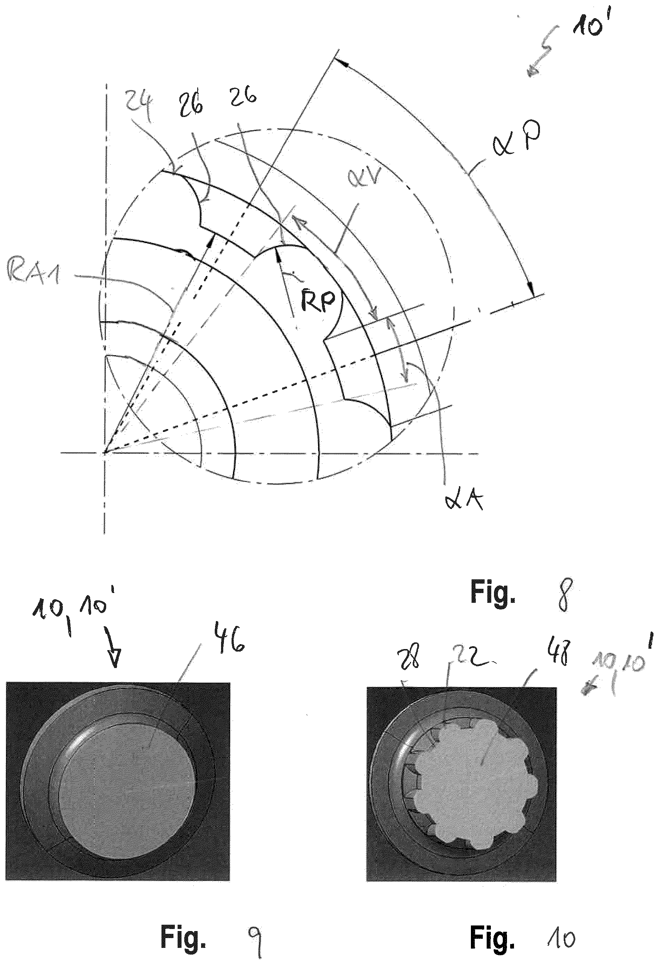

Fig. 9 is a sectional view along a line IX-IX in Fig. 3 and in Fig. 7. Fig. 10, on the other hand, is a cross-sectional view along a line X-X in Fig. 3 and in Fig. 7.

Fig. 9 shows the full circular area defined by the second shaft outer diameter DA2. On the other hand, Fig. 10 shows the slug punch area (slug hole area) defined by the shaft radial outer face 28 and each of the longitudinal projections 22.

The slug punch area 48 is smaller than the circular area 46. Particularly, a ratio of the slug punch area 48 defined by a combined contour of the shaft radial outer face 28 and the longitudinal projections 22, to the circular area 46 defined by the outer diameter DA2 of the longitudinal projections 22, is in a range from 0.75 to 0.95, particularly in a range from 0.80 to 0.90. In the present embodiments of Figs. 1 to 4 and Figs. 5 to 8, respectively, the ratio is 86.55 %.

The above dimensions of Table 1 are the nominal dimensions measured in millimeters, unless indicated otherwise, and are to be read as including usual tolerances. It is to be understood that the rivets 10, 10' may deviate from the exact dimensions, preferably within ranges or ranges of ratios of these dimensions, that are defined above.

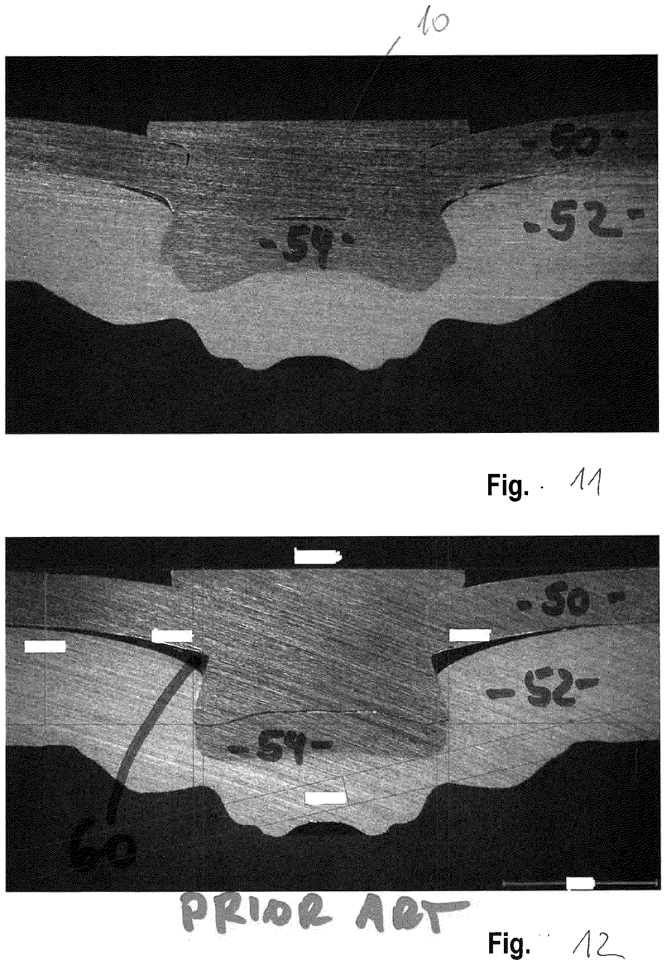

Fig. 11 shows a joint realized by the rivet 10, wherein an upper workpiece 50 and a lower workpiece 52 are joined together by means of the rivet 10. An upper workpiece slug 54 has been punched out from the upper workpiece 50.

It can be seen that almost no joining gap is present between the upper workpiece 50 and the lower workpiece 52.

On the other hand, Fig. 12 shows a similar sectional view of a joint prepared by using a prior art rivet. It can be seen that the two workpieces 50, 52 are joined together, but that a considerable joining gap 60 is created.

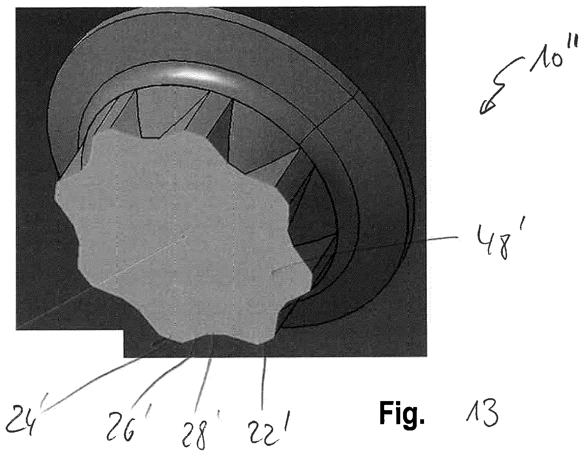

Fig. 13 shows another embodiment of a rivet 10" which corresponds with respect to dimensions and function generally to the embodiment of Figs. 5 to 8. However, the rivet 10" includes only eight longitudinal projections 22". Each of the longitudinal projections 22" has a contour which has a polygonal shape. In other words, the outer contour portion 24' is in each case a tangential contour of the second shaft outer diameter, and each of the connection contour portions 26" are straight contours connecting the outer contour portion 26' and the shaft radial outer face 28'.

### Reference Numerals:

- 10: joining element
- 12: head
- 14: hollow shaft
- 16: shaft axial end face (cutting edge)
- 18: blind cavity
- 20: transition portion
- 22: longitudinal projections
- 24: outer contour portion
- 26: connections contour portions
- 28: shaft radial outer face
- 30: cavity first portion
- 32: cavity second portion
- 36: head underside
- 38: underside/inclination portion
- 40: radius portion
- 42: arcuate cavity surface of 32
- 46: circular area defined by DA2
- 48: slug punch area (hole slug area) defined by 28 and 22
- 50: upper work piece
- 52: lower work piece
- 54: upper work piece slug
- 60: joining gap

- LN: rivet length
- LH: head length
- LP: projection length
- LC: cavity length
- DH: head diameter
- DA1: first shaft outer diameter
- DA2: second shaft outer diameter
- DI1: first cavity inner diameter
- DI2: second cavity inner diameter
- RA1: first shaft outer radius (=DA1 / 2)
- RP: projection connection radius
- RU: underside radius
- RC: cavity radius
- HV: projection height
- αV: projection angular range
- αA: shaft outer face angular range
- αP: partition angular range
- αT: taper angle
- αU: inclination portion angle
- L: longitudinal axis

## Claims

1. A semi-tubular self-piercing rivet (10) comprising
- a head (12), and
- a shaft (14), and
wherein the shaft (14) comprises a shaft axial end face (16) opposite to the head (12), wherein the shaft (14) has a shaft blind cavity (18),
wherein the shaft (14) comprises a shaft radial outer face (28) and a plurality of longitudinal projections (22) projecting from the shaft radial outer face (28),
wherein the radial shaft outer face (28) defines a first shaft outer diameter (DA1),
wherein the longitudinal projections (22) each have a radial height (HV) relative to the shaft radial outer face (28), and
wherein the shaft (14) is configured to be radially widened when being punched into a workpiece arrangement,
**characterized in that**
a ratio of the radial height (HV) of the longitudinal projections (22) to the first shaft outer diameter (DA1) defined by the radial shaft outer face (28) is in a range from 0.03 to 0.2.

2. The rivet according to claim 1 or according to the preamble of claim 1, **characterized in that** the number of longitudinal projections (22) is greater than 5 and less than 15.

3. The rivet of claim 1 or 2 or according to the preamble of claim 1, **characterized in that** a ratio of a slug punch area (48) defined by a combined contour of the shaft radial outer face (28) and the longitudinal projections (22), to a circular area (46) defined by the outer diameter (DA2) of the longitudinal projections (22), is in a range from 0.75 to 0.95, particularly in a range from 0.80 to 0.90.

4. The rivet of any one of claims 1 to 3 or according to the preamble of claim 1, **characterized in that**
- a ratio of twice the radial height (HV) of the longitudinal projections (22) to a difference between the first shaft outer diameter (DA1) and an inner diameter (DI1) of the shaft blind cavity (18), as measured in the plane of the shaft axial end face (16), is in a range from greater than 1.0 to smaller than 1.6, and/or **in that**
- the blind cavity (18) has a second cavity inner diameter (DI2) in an axial portion away from the shaft axial end face (16), wherein the longitudinal projections (22) define a second shaft outer diameter (DA2), and wherein a ratio of the second cavity inner diameter (DI2) to the second shaft outer diameter (DA2) is smaller than 0.55, particularly smaller than 0.5.

5. The rivet of any one of claims 1 to 4, **characterized in that** each of the longitudinal projections (22) extends over a projection angular range (αV) in the circumferential direction, which is larger than a shaft outer face angular range (αA) between two adjacent longitudinal projections (22).

6. The rivet of any one of claims 1 to 5, **characterized in that** the shaft axial end face (16) has an end surface area which is smaller than a circular projection area which is, in the plane of the shaft axial end face (16), defined by a first inner diameter (DI1) of the shaft blind cavity (18) and a second shaft outer diameter (DA2) defined by the longitudinal projections (22).

7. The rivet of any one of claims 1 to 6, **characterized in that**, in a cross sectional view, each of the projections (22) has an outer contour portion (24) arranged on a second shaft outer diameter (DA2), and a connection contour portion (26) which connects the outer contour portion (24) and the shaft radial outer face (28).

8. The rivet of claim 7, **characterized in that** the connection contour portion (26) is an arcuate contour defined by a projection connection radius (RP).

9. The rivet of any one of claims 1 to 8, **characterized in that** the material of the rivet is a heat treatable steel, preferably boron-alloyed, and/or has a hardness of 450 - 585 HV10.

10. The rivet of any one of claims 1 to 9, **characterized in that**
- a ratio between the first shaft outer diameter (DA1) and a first inner diameter (DI1) of the blind cavity, as measured in the plane of the shaft axial end face (16), is in a range from 1.10 to 1.30, particularly in a range from 1.14 to 1.20, and/or wherein
- a ratio between an outer head diameter (DH) and the first shaft outer diameter (DA1) is in a range from 1.40 to 1.90, particularly in a range from 1.50 to 1.80, and/or wherein
- a ratio between an axial length (LC) of the blind cavity (18) and an axial length (LP) of the longitudinal projections (22) is in a range from 0.20 to 0.95, particularly in a range from 0.40 to 0.90, and preferably in a range from 0.60 to 0.90, and/or wherein
- each of the parts of the shaft radial outer face (28) which are arranged between two adjacent longitudinal projections (22), tapers off into a transition portion (20) at a taper angle in a range from 12° to 50°, particularly in a range from 15° to 35°, preferably in a range from 15° to 25°, and/or wherein
- the blind cavity (18) has a first portion (30) arranged on a side of the head (12) and a second portion (32) arranged on a side of the shaft axial end face, wherein the second portion is defined by an arcuate cavity surface (42) which connects the first portion (30) and the axial shaft end face (16), wherein a cavity radius (RC) of the arcuate cavity surface (42) is preferably in a range from 2 mm to 4 mm, and/or wherein
- a head underside (36) of the head (12) includes an underside portion (38), which is preferably an inclination portion, and a radius portion (40) which connects the underside portion (38) and the shaft with an underside radius (RU).

11. The rivet of any one of claims 1 to 10, **characterized in that**
- a second outer shaft diameter (DA2) is 5.5 mm, and/or
- a slug punch area (48) is in a range from 19 mm² to 22 mm², and/or
- an area of the shaft axial end face (16) is in a range from 4 mm² to 8 mm².

12. The rivet of any one of claims 1 to 11, **characterized in that**
- the material of the rivet (10) is a heat treatable steel which is preferably boron-alloyed, and/or
- the rivet (10) has a hardness of 450 - 585 HV10, and/or
- the rivet is formed by a cold-forming process.

13. A method of joining work piece layers (50, 52), comprising the steps of
- stacking at least two work piece layers (50, 52) on top of each other, and
- punching a rivet (10) of any one of claims 1 to 12 into the so formed work piece layer stack.

14. The method according to claim 13, wherein at least one of the two work piece layers is made in high-strength steel or ultra-high-strength steel.
